# FASCICULE DE BREVET EUROPEEN

(11) **EP 2 276 695 B1**
(45) Date de publication et mention de la délivrance du brevet: **23.11.2016**
(21) Numéro de dépôt: 09746019.0
(22) Date de dépôt: 30.04.2009
(51) Int. Cl.: C01B 15/029, D21C 11/12, D21C 9/16

(54) **SYNTHESE DIRECTE D'EAU OXYGENEE SUR LE SITE D'UNE PAPETERIE**
DIREKTE SYNTHESE EINER WÄSSRIGEN WASSERSTOFFPEROXIDLÖSUNG AM STANDORT EINER PAPIERFABRIK
DIRECT SYNTHESIS OF AQUEOUS HYDROGEN PEROXIDE SOLUTION AT THE SITE OF A PAPER MILL

(30) Priorité: 30.04.2008 FR 0852917
(43) Date de publication de la demande: 26.01.2011
(73) Titulaire: Arkema France, 92700 Colombes (FR)
(72) Inventeur: DUBOIS, Jean-Luc, F-69390 Millery (FR)
(74) Mandataire: Gavin, Pablo
(86) Numéro de dépôt international: PCT/FR2009/050797
(87) Numéro de publication internationale: WO 2009/138700

(56) Documents cités:
- WO-A-94/10085
- WO-A-96/05138
- DE-A1- 10 144 013
- US-A1- 2002 106 320

## Description

La présente invention a pour objet une installation de production du peroxyde d'hydrogène, par synthèse directe (c'est-à-dire de l'hydrogène réagit avec de l'oxygène en présence d'un catalyseur), intégrée sur le site d'une papeterie. Elle a également pour objet un procédé de fabrication du peroxyde d'hydrogène, par synthèse directe, à partir de l'hydrogène provenant de la récupération de la liqueur résiduaire dans la fabrication de pâte de bois ou cellulosique.

Une telle installation est dite « intégrée » c'est-à-dire que le peroxyde d'hydrogène est produit sur le site même de son utilisation, en l'occurrence une usine de fabrication de pâtes à papier, selon le procédé de fabrication directe à partir de l'hydrogène et oxygène en présence d'un catalyseur, éventuellement mis en suspension dans une phase aqueuse. En outre, l'hydrogène alimentant en partie ou en totalité le procédé de fabrication du peroxyde d'hydrogène provient de la récupération de la liqueur résiduaire de l'usine de fabrication de pâte à papier.

Le document EP 666831 décrit un procédé de blanchiment d'une matière cellulosique avec du peroxyde d'hydrogène dans une usine comprenant une unité de combustion / gazéification de la liqueur résiduaire, une unité de « transformation » de gaz de synthèse, une unité de fabrication du peroxyde d'hydrogène et une unité de blanchiment.

Ce procédé comprend la récupération de la liqueur résiduaire d'une usine de pâtes pour alimenter une unité de combustion / gazéification consistant à oxyder ou gazéifier partiellement ladite liqueur à une température supérieure à 500°C pour former ainsi un flux gazeux contenant de l'hydrogène et du monoxyde de carbone. Ce flux gazeux est ensuite soumis à une étape de concentration en hydrogène pour être envoyé dans une unité de fabrication du peroxyde d'hydrogène et puis le peroxyde d'hydrogène ainsi formé, alimente une unité de blanchiment de pâte.

Le procédé de fabrication du peroxyde d'hydrogène suggéré dans le document EP 666831 est celui selon la technique d'auto-oxydation d'un dérivé anthraquinonique du type comprenant une étape (a) d'hydrogénation catalytique dans un hydrogénateur d'une solution de travail contenant au moins un dérivé anthraquinonique en solution, une étape (b) d'oxydation, dans un oxydeur, de cette solution de travail hydrogénée au moyen d'un fluide contenant de l'oxygène, une étape (c) de séparation par de l'eau, dans un extracteur, du peroxyde d'hydrogène et de la solution de travail oxydée et une étape de recyclage vers l'hydrogénateur de solution de travail oxydée récupérée à l'étape (c).

L'inconvénient rencontré par la mise en oeuvre d'un procédé classique type anthraquinone est que la solution de travail se dégrade rapidement. En outre, ce procédé classique est très sensible à la présence d'eau, même en faible quantité, qui peut s'introduire accidentellement soit dans l'oxydeur, soit dans les conduites reliant l'oxydeur et l'extracteur. A ce niveau, l'eau réagit avec la solution de travail oxydée, ce qui peut provoquer des réactions explosives. Par ailleurs, l'installation est encombrante et la mise en oeuvre d'un tel procédé est assez complexe. En effet elle nécessite de nombreuses étapes et équipements, ainsi qu'un grand volume de solvant, appelé solution de travail, qui véhicule le dérivé anthraquinonique dans l'installation, pour finir par extraire le peroxyde d'hydrogène dans de l'eau. Ce procédé convient pour produire des solutions aqueuses de peroxyde d'hydrogène de concentration supérieure à environ 35 % en poids, plus généralement de concentration d'environ 65 à 70 % en poids, alors que pour les applications de blanchiment de pâte à papier une solution aqueuse de peroxyde d'hydrogène de concentration inférieure à 15 % en poids, de préférence comprise entre 5 et 12 % en poids est mise en jeu.

La présente invention a pour but d'obvier aux inconvénients précités.

Plus particulièrement, l'invention a pour but de fournir une installation intégrée de fabrication du peroxyde d'hydrogène sur le site même de son utilisation, en l'occurrence une unité de fabrication et blanchiment de pâtes cellulosiques, selon le procédé de synthèse directe à partir de l'hydrogène provenant de la récupération de liqueur résiduaire de la fabrication et blanchiment des pâtes cellulosiques.

L'installation intégrée selon l'invention comprend :
- (i) une unité (1) de combustion partielle sous pression (oxygazéification), opérant entre 30 et 60 bar, alimentée par de l'oxygène provenant de la séparation des gaz de l'air de l'unité (7) et de la liqueur résiduaire (liqueur noire) issue de l'unité (2) de fabrication et blanchiment de pâtes cellulosiques
- (ii) une unité (3) de purification de tout ou partie de l'hydrogène de l'effluent gazeux en provenance de l'unité (1) ;
- (iii) éventuellement une unité (4) de stockage de l'hydrogène sous pression ;
- (iv) une unité (5) de fabrication du peroxyde d'hydrogène directement à partir de l'oxygène de l'unité (7) et de l'hydrogène provenant de l'unité (3) et/ou unité (4) en présence d'un catalyseur, éventuellement mis en suspension dans une phase aqueuse,
- (v) éventuellement une unité capacité- tampon (6) pour stocker temporairement du peroxyde d'hydrogène fabriqué dans l'unité (5)
- (vi) l'unité (2) de fabrication et blanchiment de pâtes cellulosiques est alimentée en peroxyde d'hydrogène provenant de l'unité (5) et/ou unité (6).

Comme l'unité (2) de fabrication et blanchiment demande un débit de peroxyde d'hydrogène qui varie dans une plage largement supérieure à la souplesse de l'unité (5) de fabrication du peroxyde d'hydrogène, il est prévu une unité capacité-tampon permettant de soutirer un débit variable de peroxyde d'hydrogène pour alimenter l'unité de fabrication et de blanchiment. L'alimentation de l'unité (2) en peroxyde d'hydrogène peut également se faire en véhiculant le peroxyde d'hydrogène par canalisation directe de l'unité (5).

La présente invention fournit également un procédé de fabrication du peroxyde d'hydrogène sur le site même de son utilisation, en l'occurrence une unité de fabrication et blanchiment de pâtes cellulosiques, directement à partir de l'hydrogène et l'oxygène en présence d'un catalyseur, éventuellement mis en suspension dans un milieu aqueux, ledit hydrogène est récupéré de la liqueur résiduaire de ladite unité.

Le milieu aqueux est de préférence à pH acide et peut comprendre des stabilisants de peroxyde d'hydrogène, des agents tensio-actifs, de préférence fluorés et des dérivés halogénés choisis parmi les bromures et chlorures de métaux alcalins, de l'acide bromhydrique, l'acide chlorhydrique et le brome à l'état gazeux ou en solution dans l'eau (eau de brome).

Lorsque le milieu comprend des dérivés halogénés, on utilise de préférence le bromure et avantageusement en combinaison avec du brome à l'état libre (Br₂).

Le procédé de fabrication directe du peroxyde d'hydrogène peut être mis en oeuvre à température comprise entre température ambiante et 60 °C, de préférence inférieure à 45 °C et à une pression supérieure à la pression atmosphérique, de préférence comprise entre 10 et 80 bars et avantageusement comprise entre 20 et 50 bars.

Le procédé de fabrication directe du peroxyde d'hydrogène peut être mis en oeuvre en continu ou discontinu dans un réacteur tubulaire, dans un réacteur agité, dans un réacteur membranaire, dans un réacteur avec une boucle de circulation ou dans un microréacteur.

Lorsque le procédé est mis en oeuvre dans un réacteur tubulaire, de l'hydrogène et l'oxygène sont injectés sous forme de petites bulles à très grande vitesse dans le réacteur complètement rempli de solution aqueuse à pH acide. On pourra se référer aux documents WO 92/04277 et WO 96/05138.

Lorsque le procédé est mis en oeuvre dans un réacteur avec boucle de circulation, par exemple selon la technologie de Buss Chem Tech de Loop-Reactor, de l'hydrogène et de l'oxygène sont injectés soit concomitamment dans l'unité soit en des points différents, par exemple en utilisant un étagement des points d'injection des gaz sous forme de petites bulles dans un milieu réactionnel aqueux. La forte dispersion des bulles dans le milieu est rendue possible par la vitesse de circulation du liquide.

Lorsque le procédé est mis en oeuvre dans un réacteur agité, de préférence vertical sous forme cylindrique, de l'hydrogène et l'oxygène sont injectés sous forme de petites bulles dans un milieu réactionnel aqueux rendu acide par l'addition d'un acide inorganique. Le réacteur agité est muni de moyens d'injection de réactifs gazeux au fond, de moyens de sortie en haut pour évacuer les réactifs gazeux. Le réacteur est de préférence muni de plusieurs turbines centrifuges disposées le long d'un arbre d'agitation unique. On pourra se référer aux documents WO 99/41190 et WO 01/05498.

Le catalyseur utilisé est en général un catalyseur supporté à base d'au moins un métal choisi dans le groupe des métaux nobles formé de palladium, platine, ruthénium, rhodium, iridium, osmium, holmium et or. On utilise de préférence un catalyseur bimétallique supporté comprenant du palladium et platine.

La liqueur résiduaire est soumise dans l'unité (1) à une oxydation partielle sous pression, entre 30 et 60 bar, en présence de l'oxygène moléculaire, de préférence de pureté supérieure ou égale à 92 % et avantageusement supérieure à 99,5% en poids, obtenu par séparation des gaz de l'air dans l'unité (7). La liqueur résiduaire est convertie simultanément en liqueur verte et gaz de synthèse dans l'unité (1). La liqueur verte est recyclée vers l'unité (2) de fabrication et blanchiment de pâtes cellulosiques.

L'unité (1) peut être alimentée en partie ou en totalité par d'autres sources de biomasses comme le glycérol, le bois ou les huiles provenant de la pyrolyse de la paille.

Comme technique de séparation de l'unité (7), on peut citer la distillation cryogénique, la perméation gazeuse qui fait appel à une perméabilité préférentielle vis-à-vis d'un des constituants du mélange à séparer au travers d'une membrane ou l'adsorption qui fait appel à une fixation préférentielle d'un ou plusieurs constituants du mélange sur un adsorbant qui est généralement un tamis moléculaire zéolithique, mais qui peut être aussi un tamis moléculaire carboné, voire une combinaison des deux types..

De l'hydrogène est ensuite séparé de l'effluent gazeux de l'oxydation partielle de l'unité (1) comprenant de préférence de 25 - 45 % en poids de l'hydrogène, de 18 - 45 % en poids de monoxyde de carbone, de 7 - 32 % en poids de dioxyde de carbone, de 0,5 à 2 % en poids de composés soufrés (notamment H₂S), après éventuelle élimination des gaz acides, essentiellement du dioxyde de carbone et du sulfure d'hydrogène, notamment par absorption chimique et/ou physique.

Dans le cas de l'absorption chimique, les gaz absorbés sont libérés par élévation de température et baisse de pression. Les absorbants les plus utilisés sont les alkanolamines (monoéthanolamine : MEA ; diéthanolamine : DEA), les sels alcalins (hydroxydes de sodium ou de potassium).

Dans le cas de l'absorption physique, les produits acides sont absorbés dans un solvant qui est régénéré par détente. Les solvants les plus utilisés sont l'éther méthylique, le propylène glycol ou le méthanol.

Après séparation, tout ou partie de l'hydrogène est purifié, par exemple par adsorption, puis éventuellement une partie ou la totalité de l'hydrogène est purifié par méthanation pour convertir le monoxyde de carbone (poison des catalyseurs de synthèse directe de peroxyde d'hydrogène) et le dioxyde de carbone résiduel en méthane. De préférence, on n'utilise pour le procédé de production de peroxyde d'hydrogène qu'une partie de l'hydrogène produit par l'unité d'oxygazéification. Dans ce cas on préfère ne récupérer par adsorption qu'une partie de l'hydrogène contenu dans le gaz de synthèse mais avec une grande pureté. Le reste de l'hydrogène et le monoxyde et le dioxyde de carbone séparés dans l'unité de purification sont remélangés avec le flux principal de gaz de synthèse en aval ou en amont de l'unité de séparation des gaz.

Dans le cas où une forte consommation d'hydrogène est nécessaire, le gaz de synthèse débarrassé des impuretés soufrées peut être envoyé dans une unité de conversion dite de gaz à l'eau, qui converti toute ou partie du monoxyde de carbone en hydrogène et dioxyde de carbone par réaction avec de la vapeur d'eau. Cette opération a pour effet d'augmenter la production d'hydrogène et de diminuer la concentration en monoxyde de carbone. Le gaz riche en hydrogène ainsi produit peut être purifié en éliminant le dioxyde de carbone présent et les traces de monoxyde de carbone restantes par les méthodes décrites ci-dessus.

Selon un mode de réalisation, la pression de l'hydrogène après l'étape de purification est voisine de la pression utilisée pour la synthèse directe du peroxyde d'hydrogène.

L'installation intégrée selon la présente invention présente l'avantage d'être compacte et donc de réduire le coût lié à l'investissement. Notamment, l'intégration sur un même site des différentes étapes du procédé, élimine pour la production de peroxyde d'hydrogène la nécessité d'investir dans une unité de séparation des gaz de l'air et dans une unité de production d'hydrogène par exemple de réformage catalytique de méthane ou de gaz naturel. En effet, l'unité de séparation des gaz de l'air est nécessaire pour la gazéification de la biomasse (liqueur noire par exemple) qui elle même produit de l'hydrogène sous pression.

Le procédé intégré selon la présente invention présente l'intérêt d'un point de vue environnemental. En effet, la production sur site élimine la nécessité de transporter le peroxyde d'hydrogène du site de production vers le site de consommation. Des quantités importantes d'énergies sont consommées lors du transport des solutions aqueuses d'eau oxygénées car celles-ci ont des concentrations comprises entre 35 et 70 %, et bien souvent à des concentrations voisines de 50 % poids, le reste étant constitué d'eau. Transporter de l'eau oxygénée revient donc à transporter de l'eau qui n'est pas utile dans les procédés avals. La production sur site d'eau oxygénée présente donc un premier avantage environnemental du point de vue des émissions de gaz à effet de serre liées au transport. Un autre avantage environnemental du procédé selon l'invention est lié aux émissions de gaz à effet de serre liées au procédé lui même : le vaporéformage de gaz naturel coproduit de l'ordre de 10 kg de CO₂ par kg d'hydrogène produit. Cette valeur peut augmenter jusque 25 kg de CO₂ par kg d'hydrogène lorsque la source d'hydrocarbures est un résidu lourd de raffinerie. Les procédés utilisant ces sources d'hydrogène et donc de carbone fossile conduisent à du peroxyde d'hydrogène ayant une production de gaz à effet de serre associés particulièrement élevée. Selon le procédé de la présente invention les émissions de CO₂ liées au procédé ne contribue pas au réchauffement climatique car la source de carbone est renouvelable. La plante, par exemple l'arbre, pour sa croissance a pompé du CO₂ atmosphérique et l'a métabolisé par exemple sous forme de cellulose. Le peroxyde d'hydrogène produit selon le procédé de l'invention, ne contribue pas au réchauffement climatique ou y contribue moins.

Un autre avantage environnemental du procédé est lié à l'absence de solution de travail constituée de solvants organiques, puisque la synthèse de peroxyde d'hydrogène est directement effectuée dans l'eau. Il n'y a donc pas de risque de dispersion accidentelle de solvants dans l'environnement, ce qui particulièrement problématique lorsque les sites de production sont isolés comme les papeteries.

## Revendications

1. Procédé de fabrication du peroxyde d'hydrogène sur le site d'une unité de fabrication et blanchiment de pâtes cellulosiques **caractérisé en ce que** de l'hydrogène, récupéré de la liqueur résiduaire de ladite unité après soumission de ladite liqueur à une oxydation partielle sous pression entre 30 et 60 bar, et de l'oxygène réagissent en présence d'un catalyseur, éventuellement mis en suspension dans un milieu aqueux.

2. Procédé selon la revendication 1 **caractérisé en ce que** le milieu aqueux est à pH acide.

3. Procédé selon la revendication 1 ou 2 **caractérisé en ce que** le milieu aqueux comprend des stabilisants de peroxyde d'hydrogène et des agents tensio-actifs.

4. Procédé selon l'une quelconque des revendications précédentes **caractérisé en ce que** l'hydrogène est obtenu par oxydation partielle sous pression de la liqueur résiduaire.

5. Procédé selon la revendication 4 **caractérisé en ce que** l'hydrogène issu de l'oxydation partielle après séparation est purifié.

6. Procédé selon l'une quelconque des revendications précédentes **caractérisé en ce que** le peroxyde d'hydrogène est utilisé dans l'unité de fabrication et blanchiment de pâtes cellulosiques.

7. Installation intégrée de fabrication de peroxyde d'hydrogène comprenant :
- (i) une unité de combustion (1) partielle sous pression (oxygazéification) opérant entre 30 et 60 bar, alimentée par de l'oxygène provenant d'une unité de séparation des gaz de l'air (7) et par de la liqueur résiduaire (liqueur noire) issue d'une unité (2) de fabrication et blanchiment de pâtes cellulosiques ;
- (ii) une unité de purification (3) de tout ou partie de l'hydrogène de l'effluent gazeux en provenance de l'unité de combustion (1) ;
- (iii) éventuellement une unité de stockage (4) de l'hydrogène sous pression ;
- (iv) une unité de fabrication du peroxyde d'hydrogène (5) directement à partir de l'oxygène provenant de l'unité de séparation des gaz de l'air (7) et à partir de l'hydrogène provenant de l'unité de purification et/ou de l'unité de stockage de l'hydrogène sous pression, en présence d'un catalyseur, éventuellement mis en suspension dans une phase aqueuse,
- (v) éventuellement une unité capacité-tampon (6) pour stocker temporairement du peroxyde d'hydrogène fabriqué dans l'unité de fabrication du peroxyde d'hydrogène (5) ;
- (vi) l'unité de fabrication et blanchiment de pâtes cellulosiques est alimentée en peroxyde d'hydrogène provenant de l'unité de fabrication du peroxyde d'hydrogène (5) et/ou de l'unité capacité-tampon (6).

## Patentansprüche

1. Verfahren zur Herstellung von Wasserstoffperoxid am Standort einer Anlage zur Herstellung und zum Bleichen von Zellstoffen, **dadurch gekennzeichnet, dass** Wasserstoff, der aus der Ablauge der Anlage zurückgewonnen wird, nachdem die Ablauge einer partiellen Oxidation unter einem Druck zwischen 30 und 60 bar unterworfen wurde, und Sauerstoff in Gegenwart eines Katalysators, gegebenenfalls suspendiert in einem wässrigen Medium, reagieren.

2. Verfahren nach Anspruch 1, **dadurch gekennzeichnet, dass** das wässrige Medium einen sauren pH hat.

3. Verfahren nach Anspruch 1 oder 2, **dadurch gekennzeichnet, dass** das wässrige Medium Stabilisatoren für Wasserstoffperoxid und Tenside umfasst.

4. Verfahren nach einem der vorhergehenden Ansprüche, **dadurch gekennzeichnet, dass** der Wasserstoff durch partielle Oxidation der Ablauge unter Druck erhalten wird.

5. Verfahren nach Anspruch 4, **dadurch gekennzeichnet, dass** der aus der partiellen Oxidation nach Abtrennung stammende Wasserstoff gereinigt wird.

6. Verfahren nach einem der vorhergehenden Ansprüche, **dadurch gekennzeichnet, dass** das Wasserstoffperoxid in einer Anlage zur Herstellung und zum Bleichen von Zellstoffen verwendet wird.

7. Integrierte Fabrikationsanlage für Wasserstoffperoxid, umfassend:
- (i) eine Anlage zur partiellen Verbrennung (1) unter Druck (Sauerstoff-Gasifizierung), die bei zwischen 30 und 60 bar arbeitet, die mit aus einer Luftzerlegungsanlage (7) stammendem Sauerstoff und mit der aus einer Anlage (2) zur Herstellung und zum Bleichen von Zellstoffen stammenden Ablauge (Schwarzlauge) beschickt wird;
- (ii) eine Anlage zur Reinigung (3) des gesamten oder eines Teils des Wasserstoffs aus dem aus der Verbrennungsanlage (1) stammenden Abgas;
- (iii) gegebenenfalls eine Einrichtung zur Aufbewahrung (4) des Wasserstoffs unter Druck;
- (iv) eine Anlage zur Herstellung von Wasserstoffperoxid (5) direkt aus dem Sauerstoff, der aus der Luftzerlegungsanlage (7) stammt, und aus dem Wasserstoff, der aus der Anlage zur Reinigung und/oder der Einrichtung zur Aufbewahrung des Wasserstoffs unter Druck stammt, in Gegenwart eines Katalysators, gegebenenfalls suspendiert in einer wässrigen Phase,
- (v) gegebenenfalls eine Einrichtung mit Pufferkapazität (6) zur zeitweiligen Aufbewahrung des in der Anlage zur Herstellung von Wasserstoffperoxid (5) hergestellten Wasserstoffperoxids;
- (vi) die Anlage zur Herstellung und zum Bleichen von Zellstoffen wird mit Wasserstoffperoxid beschickt, das aus der Anlage zur Herstellung von Wasserstoffperoxid (5) und/oder der Einrichtung mit Pufferkapazität (6) stammt.

## Claims

1. Process for producing hydrogen peroxide at the site of a unit for manufacturing and bleaching cellulose pulp, **characterized in that** hydrogen, recovered from the spent liquor produced by said unit, after subjection of said liquor to a pressurized partial oxidation between 30 and 60 bar, and oxygen, react in the presence of a catalyst, optionally placed in suspension in an aqueous medium.

2. Process according to Claim 1, **characterized in that** the aqueous medium has an acidic pH.

3. Process according to either of Claims 1 and 2, **characterized in that** the aqueous medium comprises hydrogen peroxide stabilizers and surfactants.

4. Process according to any one of the preceding claims, **characterized in that** the hydrogen is obtained by pressurized partial oxidation of the spent liquor.

5. Process according to Claim 4, **characterized in that** the hydrogen originating from the partial oxidation after separation is purified.

6. Process according to any one of the preceding claims, **characterized in that** the hydrogen peroxide is used in the unit for manufacturing and bleaching cellulose pulp.

7. Integrated installation for manufacturing hydrogen peroxide comprising:
- (i) a pressurized partial combustion (oxygasification) unit (1) operating between 30 and 60 bar, fed with oxygen originating from a unit (7) for separating air gases and with spent liquor (black liquor) originating from a cellulose pulp manufacturing and bleaching unit (2);
- (ii) a unit (3) for purifying all or part of the hydrogen from the off-gas issuing from the combustion unit (1);
- (iii) optionally, a unit (4) for storing pressurized hydrogen;
- (iv) a unit (5) for manufacturing hydrogen peroxide directly from oxygen originating from the air gas separation unit (7) and from hydrogen originating from the purification unit and/or the pressurized hydrogen storing unit in the presence of a catalyst, optionally placed in suspension in an aqueous phase;
- (v) optionally, a buffer tank unit (6) for temporarily storing hydrogen peroxide produced in the hydrogen peroxide manufacturing unit (5);
- (vi) the cellulose pulp manufacturing and bleaching unit is fed with hydrogen peroxide from the hydrogen peroxide manufacturing unit (5) and/or the buffer tank unit (6).
